# EUROPEAN PATENT APPLICATION

(11) **EP 4 418 205 A1**
(43) Date of publication of application: **21.08.2024**
(21) Application number: 24153485.8
(22) Date of filing: 23.01.2024
(51) Int. Cl.: G06T 7/00

(54) **DETECTION AND CHARACTERIZATION OF WELDING DEFECTS**

(30) Priority: 17.02.2023 US 202363446386 P; 08.01.2024 US 202418406658
(71) Applicant: Baker Hughes Holdings LLC, Houston, TX 77073 (US)
(72) Inventor: GEORGE, Sheri, Houston, 77073 (US); GRAULS, Johan, Houston, 77073 (US)
(74) Representative: Illingworth-Law, William Illingworth

(57) **Abstract**

A method for generating a recommendation based on welding defects. The method includes receiving, from an imaging device, an inspection image of a target object, determining an inspection thickness of the target object based on the inspection image, converting into a multilevel thresholded thickness map based on a particular sensitivity, determining a defect of the target object based on the inspection thickness, quantifying and characterizing the defect, determining a critical level of the defect of the target object by comparing a parameter of the defect to a critical threshold and generating a recommendation based on the critical level.

## Description

### RELATED APPLICATION

This application claims priority under 35 U.S.C. § 119(e) to U.S. Provisional Application No. 63/446,386 filed February 17, 2023, the entire contents of which are hereby expressly incorporated by reference herein.

### TECHNICAL FIELD

The subject matter described herein relates generally to automated detection and characterization of welding defects and more specifically to a learning model-based technique for generating recommendations based on automatic characterization of welding defects.

### BACKGROUND

Digital radiography is a form of X-ray imaging that is widely used to inspect industrial components, such as operational pipelines used in oil and gas production environments, which can include pipes covered in an insulated material. The pipes can include welds and/or materials that can include manufacturing errors or can erode or corrode over time causing structural deficiencies and introducing risks to the safe, efficient operation of the pipes and the pipeline in which they may be configured. Timely detection and correct characterization of industrial component defects is crucial for safe operation of industrial components.

### SUMMARY

Systems, methods, and articles of manufacture, including computer program objects, are provided for generating a recommendation based on welding defects. In one aspect, there is provided a method. The method may include receiving, from an imaging device, an inspection image of a target object, determining an inspection thickness of the target object based on the inspection image, converting into a multilevel thresholded thickness map based on a particular sensitivity, determining a defect of the target object based on the inspection thickness, quantifying and characterizing the defect, determining a critical level of the defect of the target object by comparing a parameter of the defect to a critical threshold, and generating a recommendation based on the critical level.

In some variations, one or more features disclosed herein including the following features can optionally be included in any feasible combination. In one implementation, the target object includes a portion of an industrial asset, wherein the portion of the industrial asset includes a pipe wall at a first location of an insulated pipe.

In one implementation, the method further includes: identifying seed points on the multilevel thresholded image, and region growing the seed points to determine the spatial extents of defects.

In one implementation, quantifying and characterizing the defect includes: determining a loss of material or a gain of material, determining a size of the defect, estimating a shape of the defect by determining image metrics including an aspect ratio, a perimeter, or a moment of inertia, and determining a location of the defect.

In one implementation, generating the recommendation includes an instruction for a repairing device to automatically repair the target object by correcting the defect.

In one implementation, the recommendation is generated using a defect characterization application including a predictive model.

In one implementation, the method further includes providing the recommendation based on the critical level in a display of a processing system, the display including a highlight of the defect atop a color map of the inspection image.

In one implementation, the defect includes a material loss measurement or a material gain measurement of the pipe wall.

In one implementation, the imaging device includes a radiographic source, a radiographic detector, and a crawler device including a processor, a controller, and a plurality of positioning mechanisms configured to position the radiographic source and the radiographic detector at one or more locations along a length of the target object.

Implementations of the current subject matter can include, but are not limited to, methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including, for example, to a connection over a network (e.g. the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to generating recommendations, it should be readily understood that such features are not intended to be limiting. The claims that follow this disclosure are intended to define the scope of the protected subject matter.

### DESCRIPTION OF DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 depicts an example of a system diagram, in accordance with some example embodiments;
FIG. 2 depicts an example of a defect recognition system, in accordance with some example embodiments;
FIGS. 3A-3N depict examples of graphical user interfaces displaying examples of images including detected defects, in accordance with some example embodiments;
FIG. 4 depicts a flowchart illustrating an example of a process, in accordance with some example embodiments;
FIG. 5 depicts another exemplary graphical user interface displaying examples of images including detected defects, in accordance with some example embodiments;
FIG. 6 depicts a block diagram illustrating a computing system, in accordance with some example embodiments.

When practical, similar reference numbers denote similar structures, features, or elements.

### DETAILED DESCRIPTION

The techniques described herein pertain to detection and characterization of defects of industrial components (e.g., welding defects) using an automated system. The described technique automatically processes radiography images to extract defect information including, for example, size of defects, material gain loss, location, shape. The defect information is processed by a recommendation engine that may apply a learning model in order to generate the recommendation for the user. For instance, the learning model may be generated and/or updated based on one or more previous defect information associated with a defect type. Accordingly, the learning model may differentiate between critical defects and defects that can be monitored. Furthermore, the learning model may also indicate a frequency at which combinations of defect features were included in the one or more previous critical events associated with an industrial component. The detected critical defects can be presented by a graphical user interface with a visualization of the industrial component region with an indication about the thickness loss/ gain contributed by the defect. The automatic image processing increases the accuracy and reproducibility of the defect detection results. Another advantage of the described techniques is that one or more operations that can remedy the detected defects can be automatically triggered to prevent a critical event that can be generated by a critical defect.

Determining corrosion and/or erosion in industrial components, such as multilayered pipes, is important in many industrial domains to maintain safe and efficient transport of products within insulated pipes configured to transport the product. Manufacturing defects, corrosion and/or erosion can occur at many places along the interior surface of a pipe, including a welding region, and can be difficult to inspect when pipes are covered in an insulated material or other similar form of insulation. Corrosion is an electro-chemical process resulting in deterioration of the pipe material and the production of rust on the pipe, thereby making the corrosion self-evident. Erosion is a mechanical process that results in deterioration of the pipe material by physically moving pipe material from one location to another. Traditional methods of inspection and monitoring of pipe defects are based on multiple user inputs. For example, industrial component images produced using a radiography technique are conventionally reviewed by an analyst. Traditionally, the analyst manually adjusts brightness and/or contrast of different regions in the radiography image to interpret indications whether the inspected regions include critical defects. A more experienced analyst or engineer can review an initial batch of manually filtered images to accept or reject the initial classification and/or decision related to the suspect regions. The decisions related to the suspect regions of the industrial components are typically made on the basis of type of defect, size of defect, and number of defects per unit area or length.

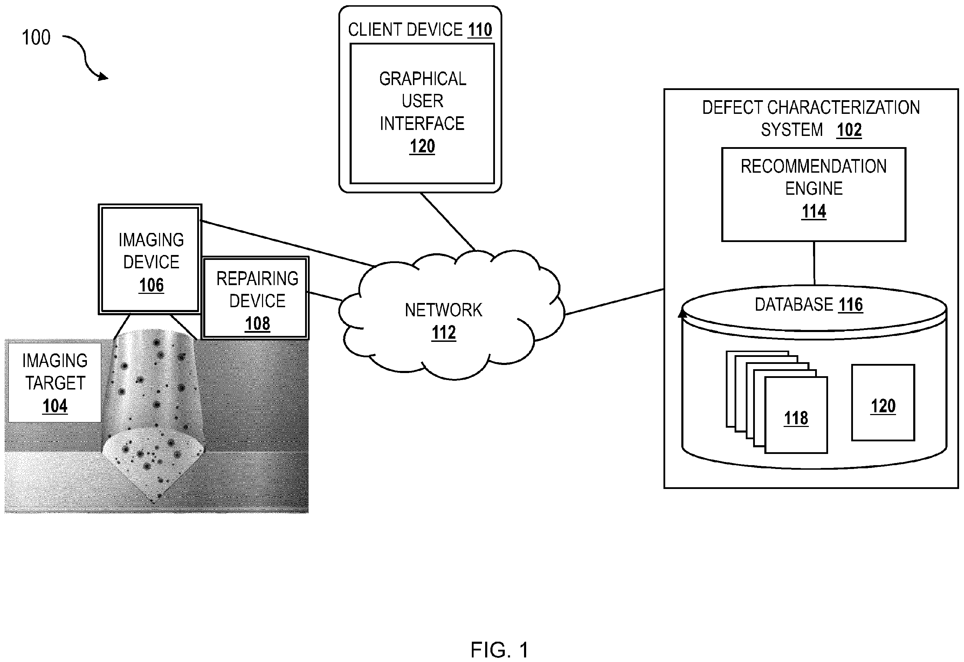

FIG. 1 depicts a diagram illustrating an example of a system 100, in accordance with some example embodiments. The system 100 illustrated in FIG. 1 includes a defect characterization system 102, an imaging target 104, an imaging device 106, a repairing device 108, a client device 104, and a network 112. The defect characterization system 102 is configured to receive, from the imaging device 106 (inspection device), data (e.g., images) associated with the imaging target 104 (e.g., and industrial component region including a weld). Furthermore, the defect characterization system 102 may be communicatively coupled, via the network 130, with a plurality of clients including, for example, a client device 110, and/or the like.

The defect characterization system 102 includes a recommendation engine 114 and a database 116. The recommendation engine 114 can be configured as a server device intended to represent various forms of servers including, but not limited to a web server, an application server, a proxy server, a network server, and/or a server pool. In general, the recommendation engine 114 accepts requests for image processing services, such as for detection and characterization of defects on industrial components (e.g., pipes, pipeline networks, and/or machines), and provides such services to any number of devices (e.g., the imaging device(s) 106, repairing device(s) 108 and client devices(s) 110) over the network 108. The recommendation engine 114 can be running instances of the corresponding executables (e.g., .exe files) included in a kernel of the database 116. It should be appreciated that the kernel of the database 116 can also include other executable (e.g., .exe files) required for running the recommendation engine 114 or other functions of the defect characterization system 102. In some implementations, an executable can be a computer program that have already been compiled into machine language (e.g., binary code) and is therefore capable of being executed directly by a data processor. The recommendation engine 114 is communicatively coupled with the database 116.

The database 116 can be any type of database including, for example, a relational database, a non-structured query language (NoSQL) database, an in-memory database, a graph database, a cloud database system environment, and/or the like. The database 116 can store a local library that can include documents 118 and a learning model 120 that can be used by the recommendation engine 114 for detecting and characterizing defects. The documents 118 can include training documents (e.g., past repairing decisions associated with past recommendations of detected defects), executable files (e.g., executable files used by image processing applications and defect characterization applications for automatic detection and characterization of defects in imaging targets 104), and recommendation setting files (e.g., including threshold parameters for automatic characterization of defects). The documents 118 can be stored by the database 116 as a multidimensional file, such as an excel file. The excel file can allow users to edit the document 118, such as modify dimensions (rows and/or columns within a single or multiple tabs), add items to one or more dimensions of the document 118, and/or modify data type within particular dimensions of the document 118. The document 118 can include any type of electronic document including structured data, for example, in the form of key value pairs. The key in a key value pair can be a string value identifying a corresponding value (e.g., threshold parameter value for automatic characterization of defects).

In some example embodiments, the learning model 120 may be stored in tables that may be expanded dynamically to include additional objects (defect classifications) when the client device 110 creates defect related events having objects that are not already a part of the learning model 120. For example, while the learning model 120 includes only a first set of defect parameters (e.g., location, size, material gain/ loss, shape), the recommendation engine 114 may receive, from the client device 110, an indication to add, to defect characterization a new defect parameter (e.g., defect time progression). In response to the addition of the new defect parameter to the defect characterization, the recommendation engine 114 may expand the one or more tables storing the learning model 120 to accommodate the defect characterization.

The client devices(s) 110 can be and/or include any type of processor and memory based device, such as, for example, cellular phones, smart phones, tablet computers, laptop computers, desktop computers, workstations, personal digital assistants (PDA), network appliances, cameras, enhanced general packet radio service (EGPRS) mobile phones, media players, navigation devices, email devices, game consoles, or an appropriate combination of any two or more of these devices or other data processing devices. The client device 110 can include any combination of fixed and variable computing components. Even though, not illustrated, in some implementations, multiple client devices 110 including different computing system configurations, such as different operating systems, different processing capabilities, different hardware components, and/ or other differences can concurrently receive defect characterization results from the defect characterization system 102, including defect repair recommendations from the recommendation engine 114. The client device 110 can be configured to display, on the graphical user interface 122, the defect characterization results received from the defect characterization system 102.

As shown in FIG. 1, the client device 110 can be communicatively coupled, via the network 112, with the defect characterization system 102 to enable monitoring of automatically performed defect characterization processes. It should be appreciated that the network 112 can be any wired and/or wireless network including, for example, a public land mobile network (PLMN), a local area network (LAN), a wide area network (WAN), the Internet, a cellular network, a telephone network (e.g., PSTN) or an appropriate combination thereof connecting any number of communication devices, mobile computing devices, fixed computing devices, server systems, and/or the like.

Within a context example, the imaging device 106 (inspection device) can be configured to scan a region of the imaging target 104 according to a scanning plan (defining scanning settings) that can be stored by the database 116. The imaging device 106 can include any device configured to generate a non-destructive beam that can penetrate through the imaging target, up to a set depth and can record a response of the interaction of the beam with the imaging target, such as an x-ray imaging device, a computer tomography imaging device and any other type of imaging devices and sensors. The imaging device 106 can transmit the acquired images to the recommendation engine 114, which can automatically process the images of the scanned region of the imaging target 104 according to detect any potentially existent defects. The recommendation engine 114 can characterize the detected defects, using a defect characterization application including one or more machine learning algorithms for automatic characterization of defects in imaging targets 104. The recommendation engine 114 may generate a recommendation for the client device 110 to approve a repair of the detected defect characterized as critical that can be executed by the repairing device 108.

In some example embodiments, the recommendation engine 114 may generate and/or update, based on feedback received from the client device 110, at least on one or more defect characterization parameters used by a learning model stored by the database 116. For example, in response to detecting initiation of a repair event for a detected defect automatically assigned to monitoring, the recommendation engine 114 may update the learning model 120 to increment a critical level of defects including a combination of the detected defect parameters manually assigned to repair. Additionally and/or alternatively, in response to detecting replacement of a repair event with a monitoring event for a detected defect automatically assigned to a repair event, the recommendation engine 114 may update the learning model 120 to decrease a critical level of defects including a combination of the detected defect parameters manually assigned to monitoring. As such, the recommendation engine 114 may query the database 116 in order to update the learning model and/or to apply the learning model to generate one or more recommendations.

As noted, when the recommendation engine 114 receives, from the client device 110, an indication to create a repair event, the recommendation engine 114 may respond by at least applying the learning model 120 to generate a recommendation for the client device 110 to add, to the repair event, the imaging target 104. Accordingly, the recommendation engine 114 may generate the recommendation to add the imaging target 104 to the repair event based at least on the defect characterization of as defect detected in the imaging target 104. For example, the recommendation engine 114 may generate the recommendation to add the imaging target 104 to the repair event based at least on a defect parameter exceeding a critical threshold. Additionally and/or alternatively, the recommendation engine 114 may generate the recommendation to add the imaging target 104 to the repair event based at least on a combination of defect parameter exceeding respective critical threshold values.

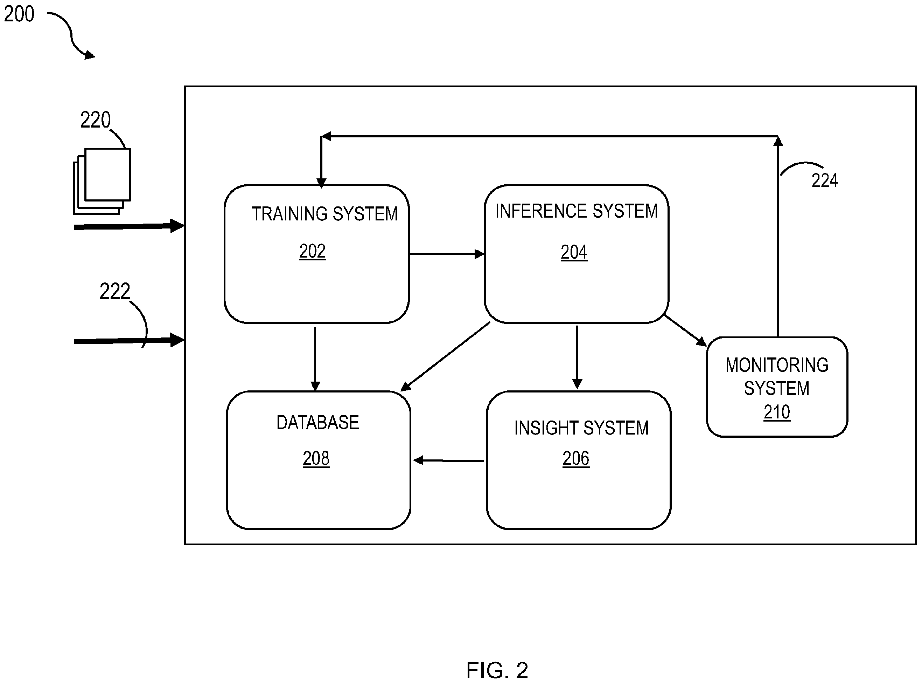

FIG. 2 is a schematic illustration of an example of a defect characterization system 200 (e.g., defect characterization system 102 described with reference to FIG. 1) that includes a training system 202, an inference system 204, an insight system 206, a database 208 and a performance monitoring system 210. The defect characterization system 200 can be configured to receive images 220 (e.g., training images and images of an imaging target). The training system 202 can include one or more training algorithms. The training algorithms can receive the images as input and generate a defect inference algorithm as output. In some implementations, a given training algorithm can generate and/or train a defect inference algorithm by determining one or more coefficients in the defect inference algorithm. For example, the training algorithm can include an optimization algorithm that can differentiate between a critical defect and a non-critical defect based on human-assisted training. This some implementations, the search for inference algorithm coefficients can be performed, for example, by Stochastic Gradient Descent (or variations thereof). The inference system 204 can include multiple preset (predefined) inference algorithms. In some implementations, a given training algorithm can be configured to generate a unique inference algorithm (e.g., based on a subset of the training images including different defect characteristics). For example, each training algorithm can be configured to generate a unique inference algorithm.

In some implementations, one or more inference algorithms can be selected from the inference algorithms based on one or more characteristics of a defect detected in the received images 220. In some implementations, a user can provide a user input 222 requesting a binary determination associated with a defect (e.g., whether the defect(s) of a certain type (or having certain characteristics) is present or absent in the imaging target). In some implementations, the defect characteristic can include one or more of defect location (e.g., proximity to a critical asset and/or vulnerable point), defect size, material gain/ loss, shape geometry overhang, delamination, foreign materials in the imaging target, welding defects, assembly defects, etc. Based on this request a binary discriminator inference algorithm can be selected from the inference algorithms in the inference system 204. The binary discriminator inference algorithm can be configured to output an affirmative inference result indicative of presence of the defect(s) or a negative inference result indicative of absence of the defect(s). In some implementations, the binary discriminator inference algorithm can include multi-class classification. For example, in addition to determining whether the defect is present, the class / type of the identified defect and a critical level of the defect can be determined.

In some implementations, a training algorithm in the training system 202 can be configured to generate the binary discriminator inference algorithm (e.g., prior to receiving the user input 222). The training algorithm can generate the binary discriminator inference algorithm based on classification of the training images 220 (or a portion thereof) into two classes. For example, a first class of training images from the plurality of training images 220 that include an image of a defect (e.g., image of the defect identified in user input 222) can be identified. A second class of training images from the plurality of training images 220 that do not include an image of the defect can be identified. Determination of the two classes of training images can be done, for example, by searching for the defect in the annotations / labels of the training images 220. In some implementations, the classification of the training images can be performed by a separate classification system (not shown), and the classified images can be received by the training algorithm as input. The training algorithm can generate the binary discriminator inference algorithm as an output. Alternately, the training algorithm can be configured to perform both the classification and the generation of the binary discriminator inference algorithm.

In some implementations, a user can provide the user input 222 with a request to locate a defect in the image of the imaging target. Based on an automatically generated trigger to characterize a defect, the defect localization inference algorithm can be automatically selected from the plurality of inference algorithms in the inference system 204. The defect localization inference algorithm can be configured to output a modified image (thickness image) of the imaging target that emphasize one or more characteristics of the identified defect in the images.

In some implementations, a user can provide the user input 222 with a request to quantify a defect in the image of the imaging target. Based on this request, a quantification inference algorithm can be selected from the plurality of inference algorithms in the inference system 204. The quantification inference algorithm can be configured to evaluate a severity factor associated with the defect identified by the user input 224 during a training and using a classification algorithm stored by the database 208. In some implementations, generating the defect quantification algorithm can include generating a mask associated with the identified defect. The mask can be configured to provide pixel-level information associated with the identified defect. In some implementations, masks can be used to calculate an area of the defect that can quantify the severity (e.g., size of the area can be proportional to the severity factor associated with the defect). In some implementations, masks can be used to detect material characteristics that can be indicative of presence of the defects.

In some implementations, selection of the one or more inference algorithm can be based on characteristics of one or more training images. For example, the training images can be annotated to indicate the type of inference algorithm that can inspect the training images. Additionally or alternately, selection of the inference algorithm can be based on analysis of the annotations of the training images. The one or more inference algorithms generated by the training system 202 (e.g., one or more of binary discriminator inference algorithm, defect localization inference algorithm, quantification inference algorithm, etc.) can receive the image(s) 220 of the imaging target as an input and output one or more characteristic of the image of the imaging target. After completion of the training, the output defect characteristics can be automatically generated for each detected defect. For example, a binary determination of defect presence can be associated to each imaged region of the imaging target. The output of the selected binary discriminator inference algorithm can include an affirmative inference value indicative of presence of the defect(s) or a negative inference value indicative of absence of the defect(s). Additionally defect characterization can include a request to locate a defect in the image of the imaging target, the output of the selected defect localization inference algorithm can include a modified image of the imaging target that includes the received image of the imaging target and a marker indicative of the defect classification identified in the user input 224 during a training.

In some implementations, the output of the selected quantification inference algorithm can include a severity factor associated with the defect identified in the user input 224 during the training of the learning model. In some implementations, the severity factor can be indicative of the impact of the defect on the operation of the target object (e.g., impact of the defect on the operation of the battery). For example, the severity factor can be a value from a predetermined value range where each value of the values in the predetermined value range indicates of the degree of impact / threat of the defect on the imaging target.

In some implementations, the inference system 204 can include an image modification algorithm that can modify the images of the imaging target configured to be inspected by the defect recognition system 200. The image modification algorithm can include a denoising / upscaling algorithm. The denoising / upscaling algorithm receives the image of the imaging target and removes noise characteristics from the received image. The noise characteristics can include noise introduced to the imaging target image during its acquisition. For example, if the scan time of the target object is small, the resulting image can be blurry (e.g., may not have desirable sharpness / contrast). This may inhibit the ability of the inference system 204 from detecting / identifying defects in the image.

In some implementations, the denoising / upscaling algorithm can include AI models (e.g., deep learning networks) trained on a dataset of noisy images and configured to identify and/or filter out noise characteristics from the image. The noise characteristics can include, for example, additive uniform Gaussian noise, spatially non-uniform Gaussian noise, etc. In some implementations, the denoising / upscaling algorithm can be trained on noisy images generated under conditions having one or more parameters in common with the inspection parameters (e.g., within a predetermined range from the inspection parameters) associated with the capture of the image of the imaging target. The inspection parameters can include, for example, properties of the electromagnetic radiation (e.g., intensity, beam properties, etc.) used in CT imaging, the type of battery under inspection, etc. In some implementations, the denoising / upscaling algorithm can be trained on noisy images from the imaging device capturing the images of the imaging target. As a result, it can be trained to identify and remove inspection noise generated by the imaging device.

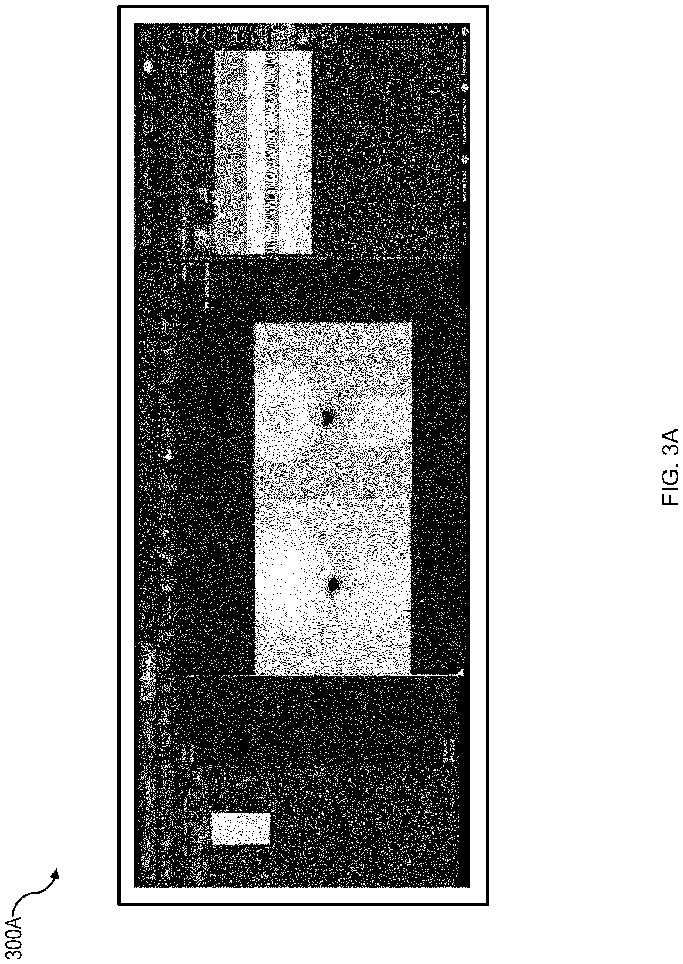

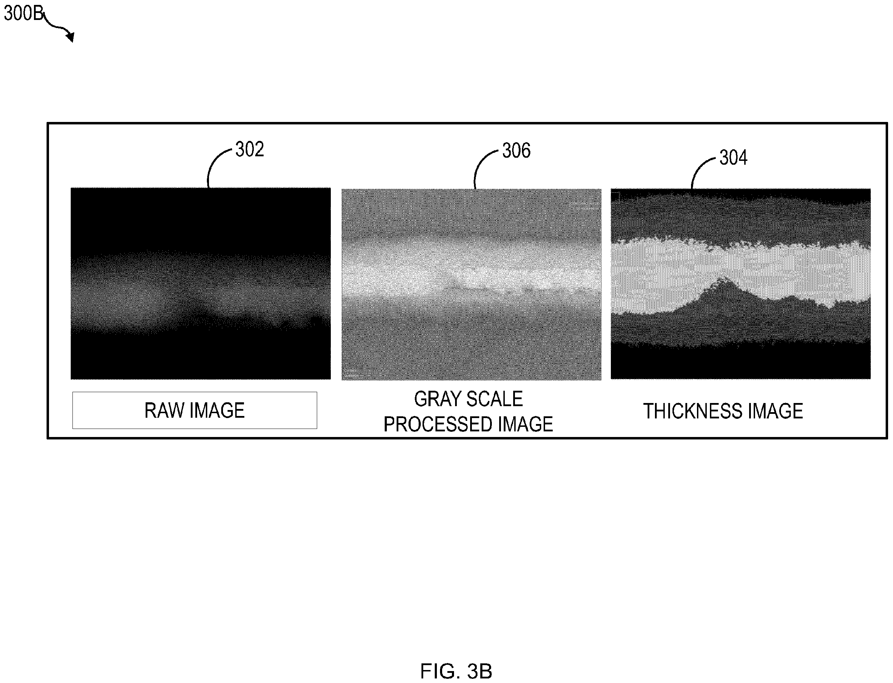

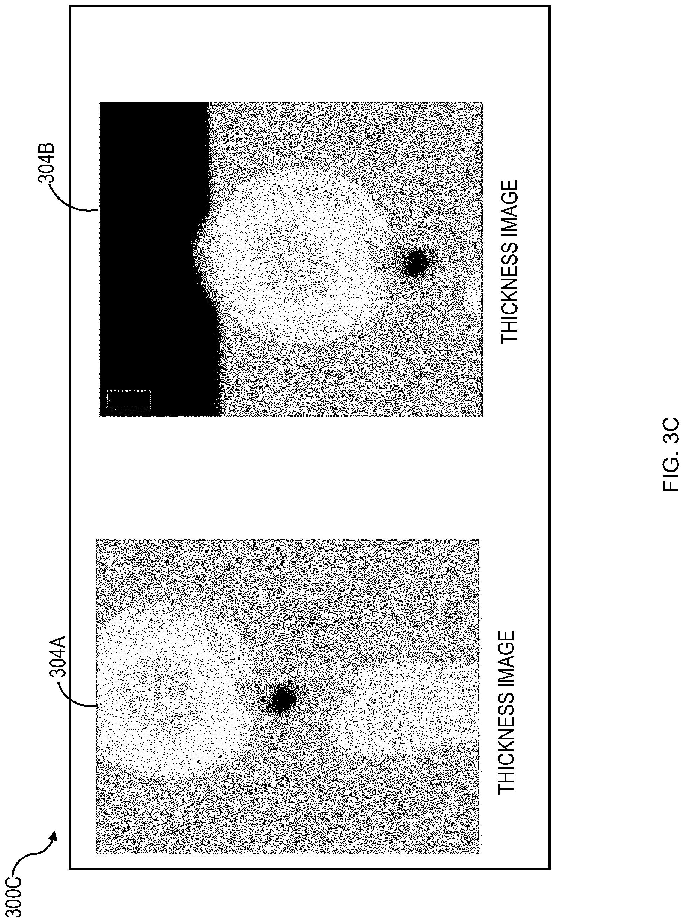

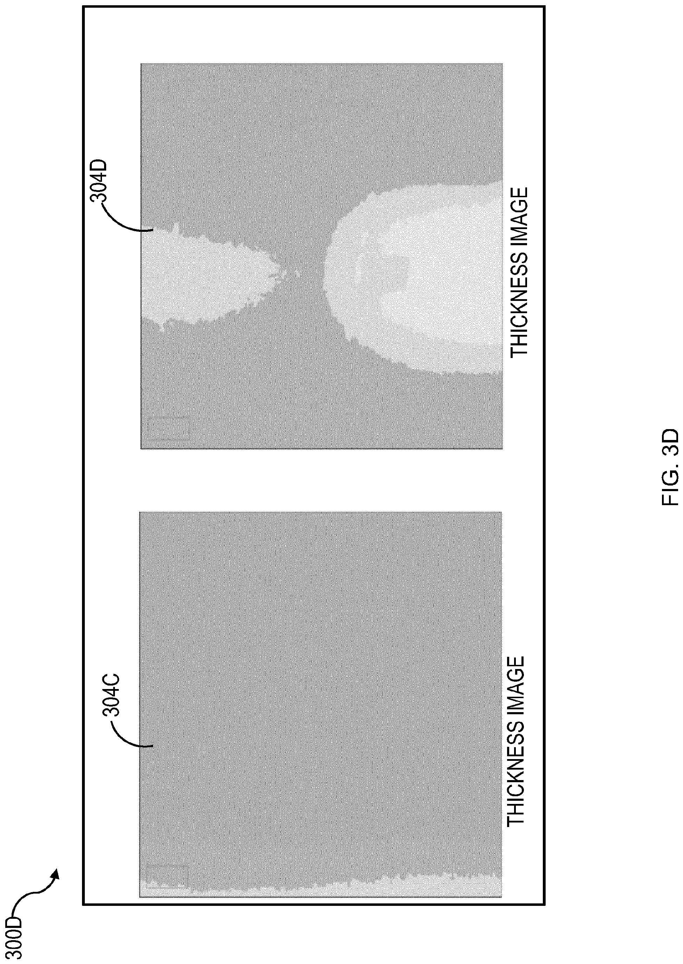

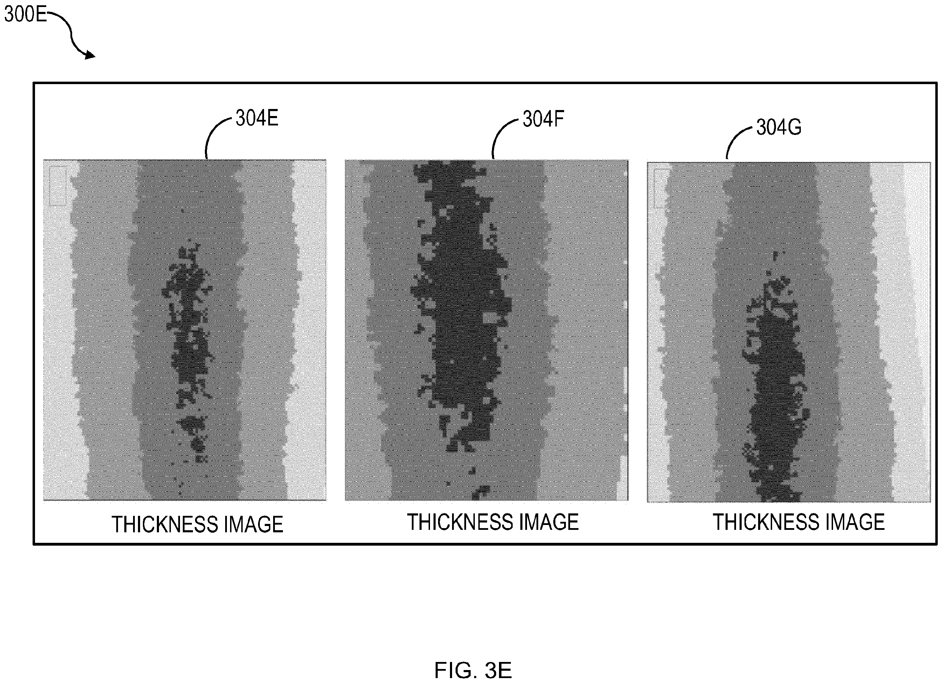

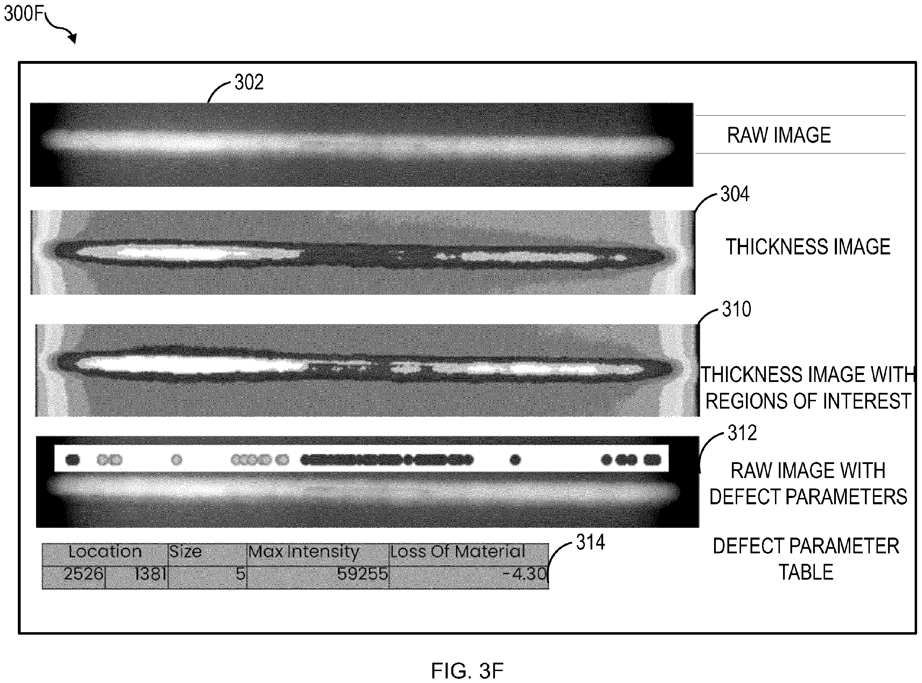

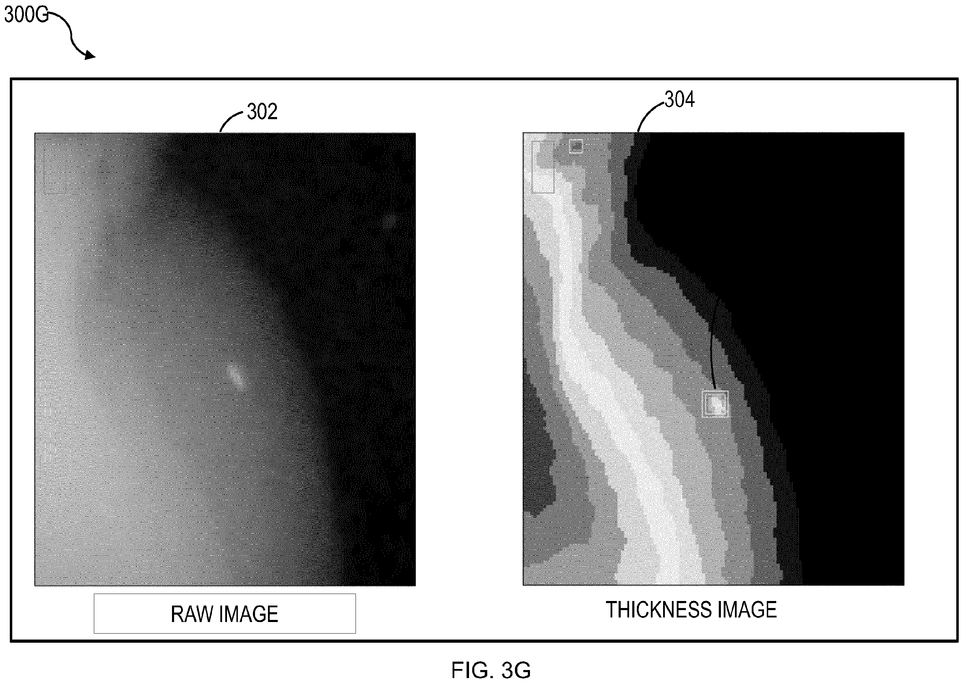

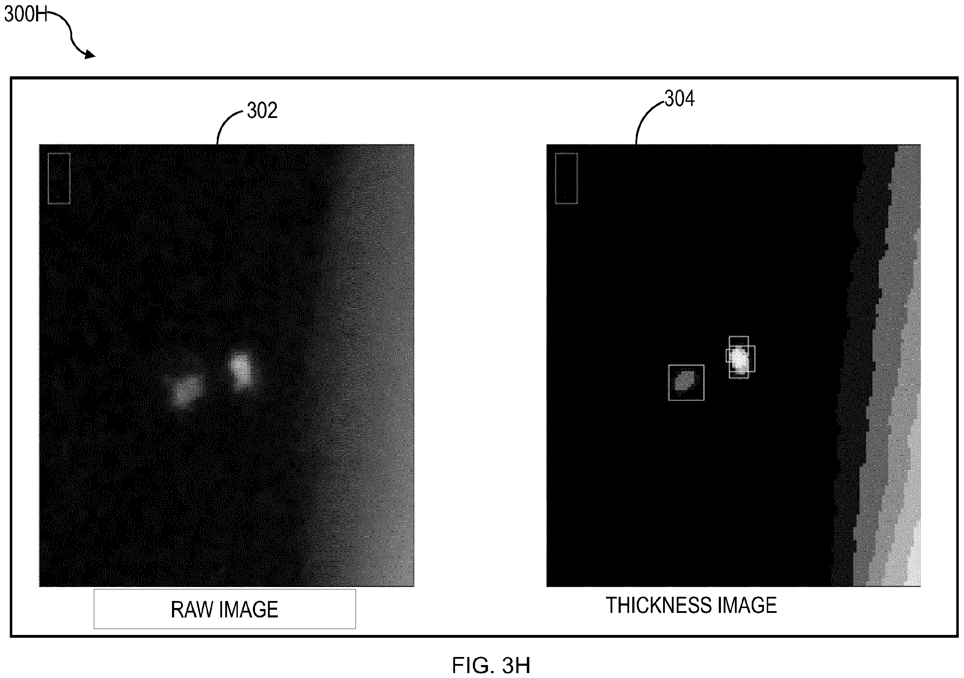

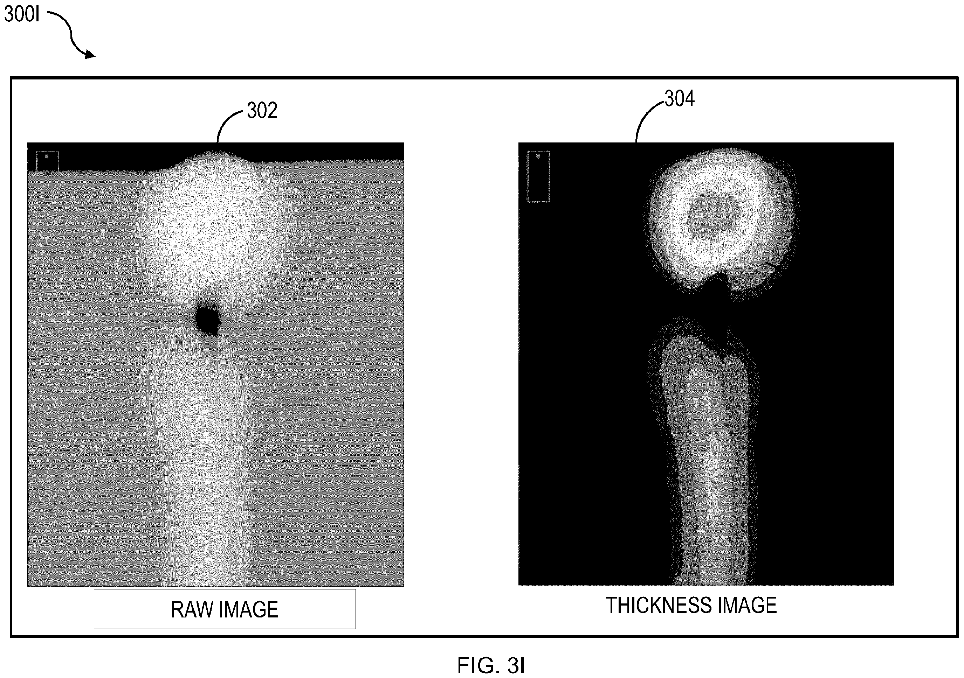

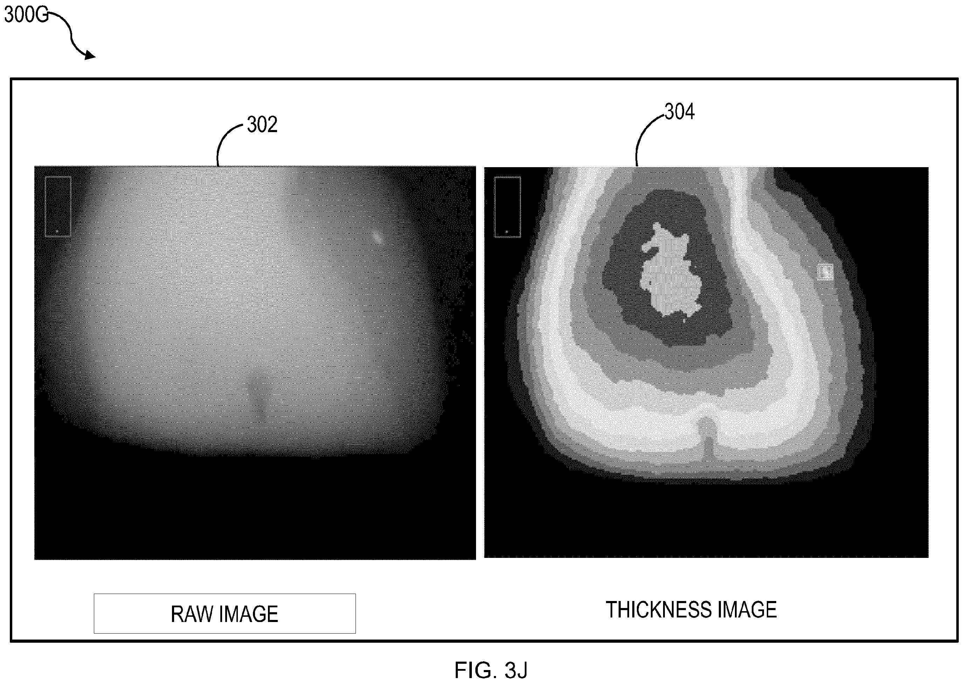

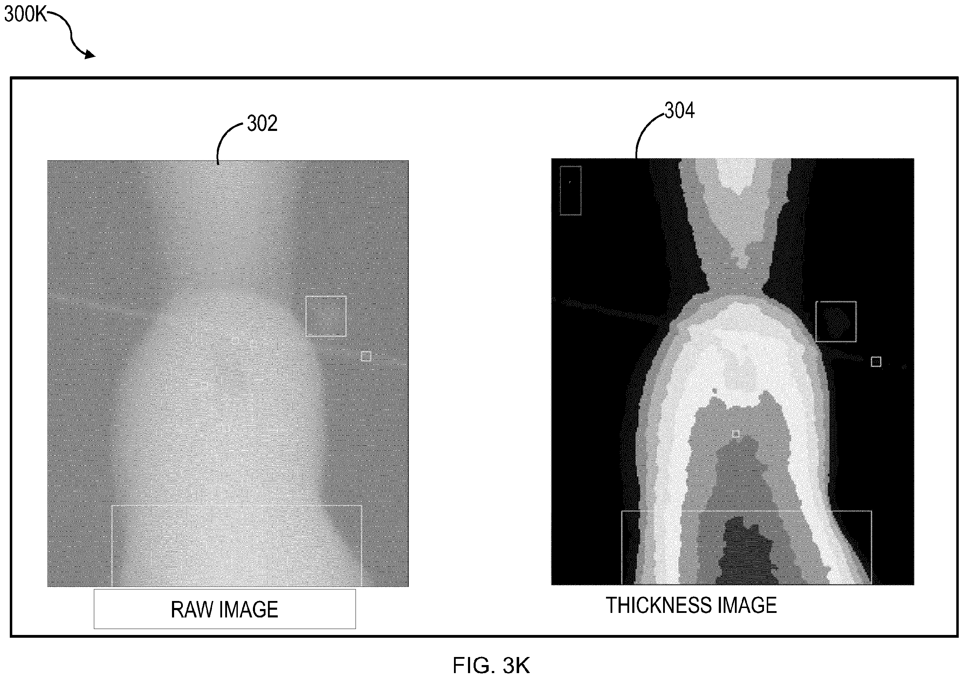

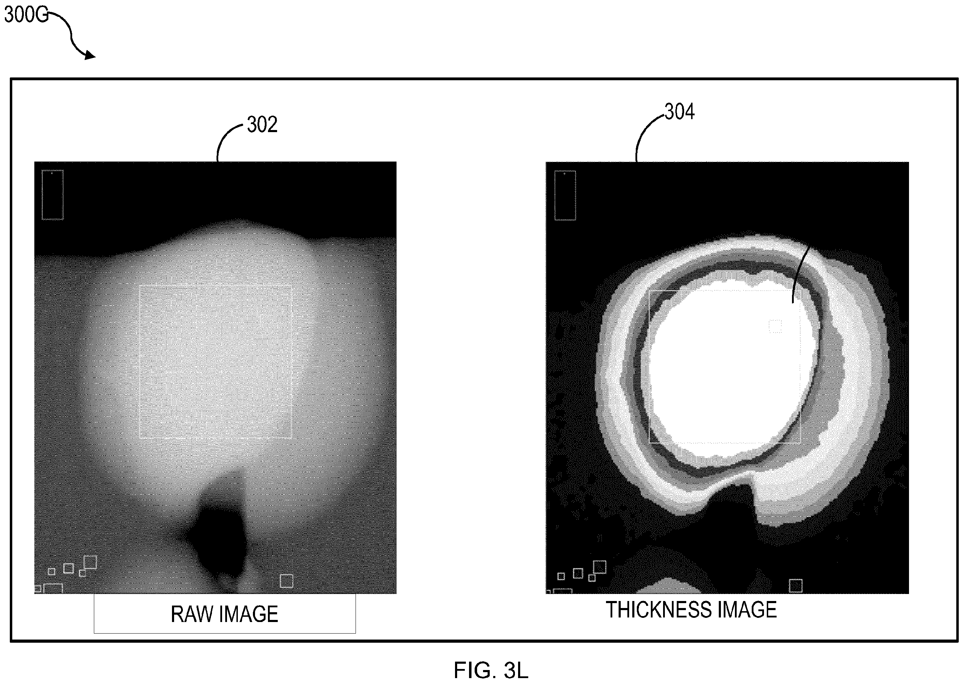

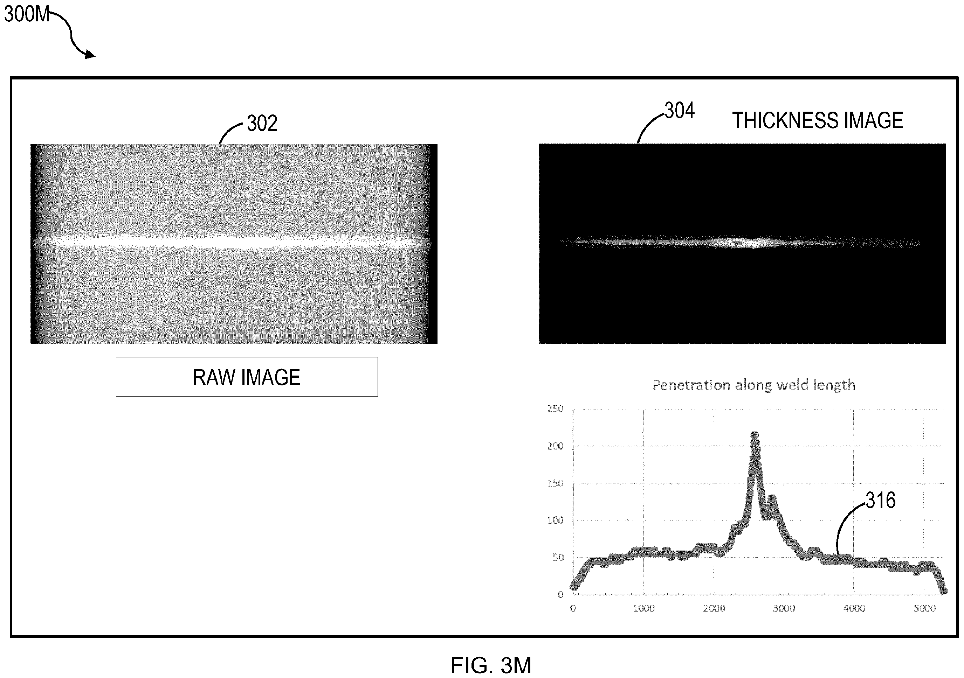

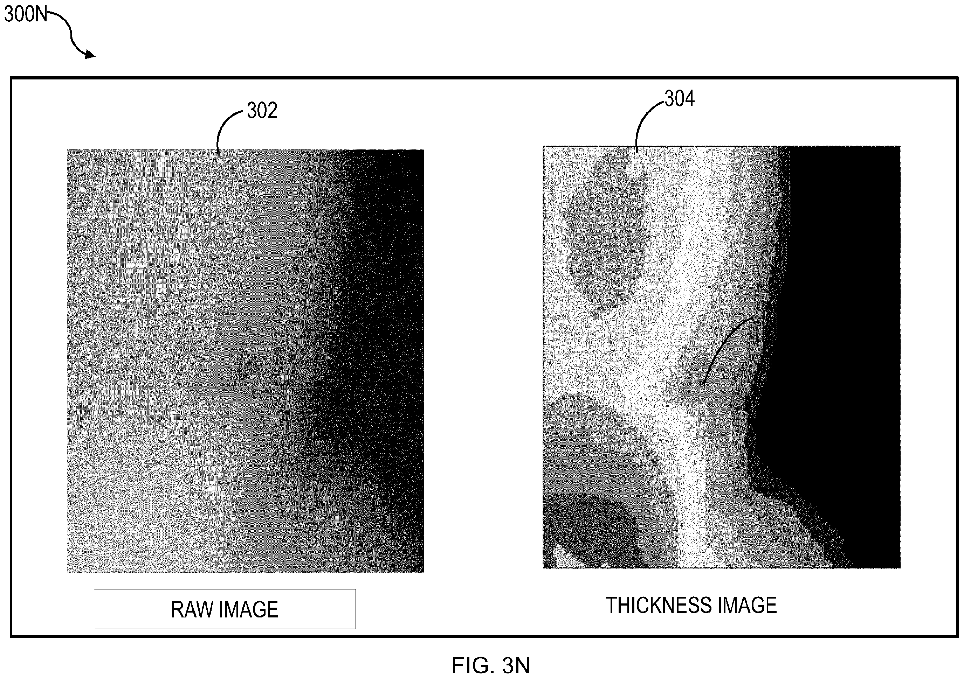

FIGS. 3A-3N depict examples of graphical user interfaces (GUIs) 300A-300N displaying examples of displays of images including detected defects using the systems described in FIGS. 1 and 2. In some implementations, as illustrated in FIGS. 3A, and 3B the graphical user interfaces 300A and 300B, respectively can be divided in multiple (two or three) parts to show different images of the same imaging target. For example, as illustrated in FIGS. 3A, 3G-3L, and 3N one (e.g., left) portion of graphical user interface 300A can include a radiography (raw) image 302 and a second (e.g., right) portion of graphical user interface 300A can illustrate a thickness image 304. As illustrated in FIG. 3B, in some implementations, the graphical user interface 300B can also include a third portion to illustrate a traditional gray scale processed image 306. As illustrated in FIG. 3B, in some implementations, the graphical user interface 300B can also include a third portion to illustrate a traditional gray scale processed image 306. As shown in FIG. 3M, in some implementations, the graphical user interface 300M can include multiple portions, from which one portion 310 illustrates the regions of interest and one or more portions 312, 314 illustrate the defect parameters. As indicated in the example provided by FIG. 3F, in some implementations, the graphical user interface 300F can also include a third portion to illustrate penetration along depth 316. In some implementations, the graphical user interfaces 300C, 300D, 300E can include multiple thickness images 304A, 304B, 304C that correspond to multiple imaging targets that can be related (corresponding to adjacent portions of the same industrial object or can correspond to the same portion imaged at different points in time to show variation of defect over time). Some thickness images 304A, 304B can indicate lack of material or excess material, as shown in FIG. 3C. Some thickness images 304C, 304D can indicate material gain, as shown in FIG. 3D. Some thickness images 304E, 304F, 304G can indicate material loss, as shown in FIG. 3E.

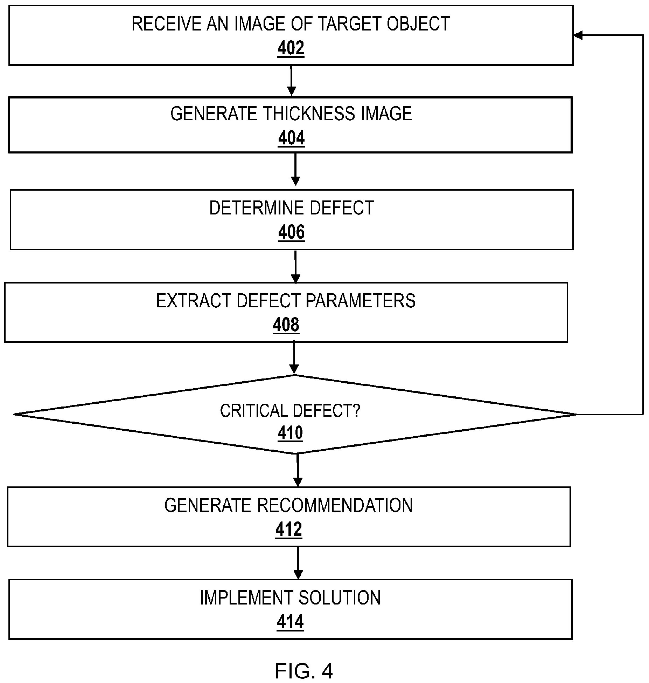

FIG. 4 depicts a flowchart illustrating a process 400 for characterizing defects, in accordance with some example embodiments. Referring to FIGS. 1 and 2, the process 400 may be performed by the defect characterization system 102 and 200, respectively.

At 402, an image of a target object (e.g., a portion of a pipe) obtained from inspection of the target object can be received (e.g., by a defect recognition system). The image can be generated by an imaging device (e.g., imaging device 106 described with reference to FIG. 1) and transmitted to the defect characterization system. The image can include a raw radiography image, where the signal strength at each location is indicative of a property of the material imaged at the corresponding location. In some implementations, the image acquisition is automatically triggered (e.g., according to an imaging plan transmitted to or stored in the imaging device).

At 404, the received image is processed to generate a thickness image with a particular thickness sensitivity. In some embodiments, for example, the thickness image can have a 2% sensitivity, however other percentage sensitivities are also realized. Further, at 404, the received image is processed to generate a calibration model of the imaging target (pipe wall at a first location). The calibration model can be a mathematical model or a data structure that can be used to determine a thickness of a wall of the imaging target in the received image. The thickness image can include a normalized representation of the thickness of the imaged material, as it is distributed throughout the imaged area.

At 406, one or more defects are determined. Each defect can be associated to an automatically identified region of interest. The region of interest can be a portion of the thickness image with a gradient (lowest or highest) thickness variation within one or more dimensions that exceeds a set thickness variation threshold. The region of interest can be used as a starting point (a seed voxel in the thickness image) for a region grow method. Determining the defect can include growing a defect region (area) starting at a seed voxel within the thickness image, computing the thickness variation based on a set of voxels having values of a common attribute (thickness variation exceeding the thickness variation threshold) close to a thickness variation of the seed voxel, and stopping the growth of the defect when a rate of expansion exceeds a predetermined value and/or thickness variation is below the thickness variation threshold within a percentage of the neighboring voxels. The region growth can proceed diagonally, and/or orthogonal directions. The region grow method can be used to analyze differences in the thickness image pixel by pixel to determine thickness differences related to a detected defect having the center (seed voxel) within the selected region of interest. In some implementations, the thickness image can be displayed with marked regions of interest. The regions of interest can be color coded in the display, based on the severity of the defect.

At 408 defect parameters are extracted to quantify and characterize the defect. The defect parameters can include a size (length, width and area) of the detected defect (e.g., corrosion and/or erosion), quantification (e.g., percentage) of lack of material such as an amount of material loss (e.g., amount of wall loss) in the imaging target or excess material (e.g., material gain). In some implementations, previously determined defect parameters of the imaging target are retrieved from a database and a defect progress analysis is automatically performed to determine a defect progression rate within a set time interval (e.g., defect size variation and/or material gain or loss variation). An image illustrating using color coded values of the defect parameters can be generated (e.g., image 312 in FIG. 3F). The defect parameters can be included in a table (e.g., table 314 in FIG. 3F).

At 410, it is determined a critical level of the defect by determining whether a detected defect is as critical, moderate, or insignificant. The classification of the critical level can be based on determining whether one or more defect parameters are above a threshold. In some implementations, if any of the defect parameters is above a respective first threshold, the defect is identified as critical. The respective defect parameter threshold can depend on a type of material composing the imaging target, on a type of asset defining the imaging target and on a critical level associated with the imaging target. For example, a defect parameter threshold of a peripheral industrial asset can be higher than a defect parameter threshold of a node industrial asset, the functionality of which enables the functionality of other industrial asset(s). In some implementations, if multiple defect parameters are above respective second thresholds, the defect is identified as critical. For example, if material change (loss or gain) of a detected percentage is above a respective second threshold along a dimension exceeding a second dimension threshold, the defect is identified as critical. As another example, if the variation (change over time) of any of the defect parameters exceeds a change rate threshold, indicating an increase in defect severity, a defect previously categorized for monitoring class, can be reassigned to a critical class. In some implementations, the classification of defects can be performed by a learning model trained on a set of images and user input to confirm and/or adjust classification. In some implementations, if the classification of defect is not generated within a set confidence level, the process can be set to return to 402, to receive additional images (e.g., of adjacent regions of the imaging target).

At 412, the defect characterization system can generate a recommendation to monitor defects or to initiate a repair event of the imaging target using the repairing device. The defect characterization system can transmit the generated recommendation to the client device to approve the repair event. In some implementations, the recommendation is transmitted to the client device with the radiography image, the thickness image, and the defect parameters. The client device can be configured to display on a graphical user interface (as described with reference to FIGS. 3A-E) the radiography image, the thickness image, the defect parameters, and the recommendation related to the detected defect. For example, the recommendation can be included in a display of a processing system, the display including a highlight of the defect based on the defect parameters atop a color map of the inspection image. The highlight can be correlated to the critical level of the defect (e.g., red for critical, orange for moderate, and green for insignificant).

At 414, a solution is implemented by generating a trigger to initiate the repair event of the imaging target using the repairing device. In some implementations, the trigger is automatically generated to automatically repair imaging targets with critical defects if the imaging target is identified as a high priority (node or central) asset. In some implementations, the trigger is generated in response to receiving a user input approving the automatically generated recommendation.

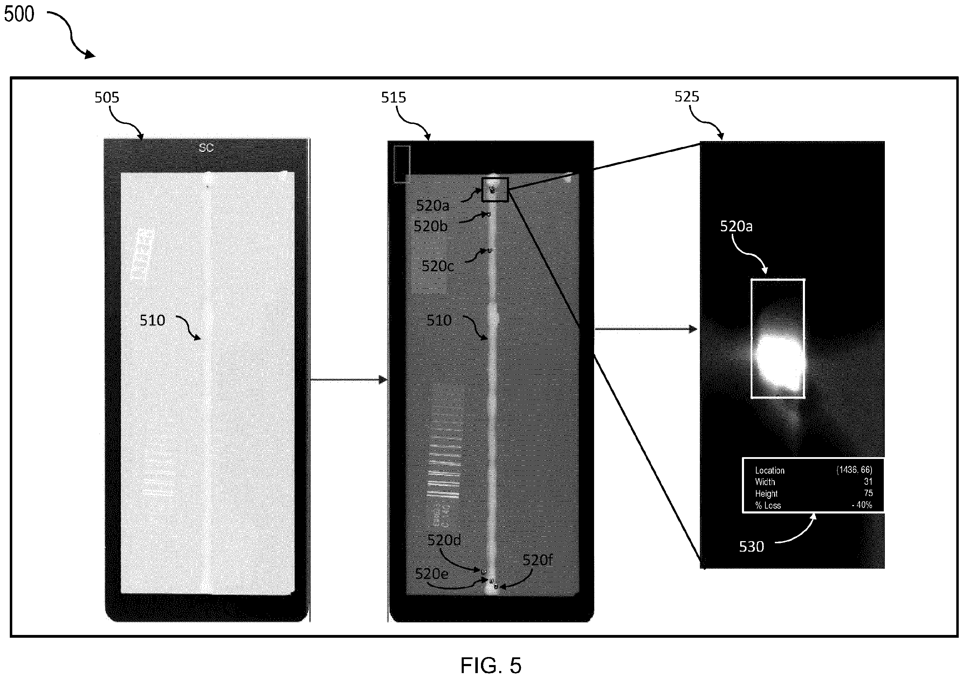

FIG. 5 depicts another example of a GUI 500 for the systems, methods and computer program products described herein for detecting and characterizing defects in a weld, for example, according to the method described above in reference to FIG. 4. As shown in FIG. 5, the GUI 500 can be configured to display a raw image 505 of a target object. The raw image can include a weld 510. In some embodiments, for example, the target object can be all, or a portion of an industrial asset, e.g, a pipe wall having a welded region. The GUI 500 can also include a modified/thickness image 515. In some cases, the thickness image 515 can be generated using the image modification algorithm as described above in reference to FIG. 2 in order to remove noise characteristics and adjust a sharpness and/or contrast of the raw image 505. As shown in FIG. 5, the weld 510 is much more easily distinguishable from the rest of the target object in the thickness image 515 than it is in the raw image 505.

From the thickness image 515, the system can be configured to determine a plurality of defects within the weld 510 (also described herein as identifying seed points), as described above in reference to FIG. 4. Once the defects are determined, the GUI 500 can generate a plurality of indicators 520a-520f within the thickness image 515 to indicate a plurality of locations of the plurality of defects within the weld 510. In some embodiments, each indicator 520a-520f can include reference number, e.g., a number 1-6 in order to further identify each defect, however other indications are also realized.

Additionally, as shown in FIG. 5, a user may select a defect indicator 520a of the plurality of defect indicators 520a-520f causing the GUI 500 to generate a zoomed image 525 of the selected defect (also described herein as region growing the seed points). In some embodiments, the system can be configured to automatically index through each of the plurality of defect indicators 520a-520f, generating a zoomed image 525 for each defect. In some embodiments, the zoomed image 525 can be presented as one-to-one zoomed image such that the selected defect is presented within GUI 500 in a size that corresponds to the actual size of the selected defect within the target object. The zoomed image 525 provides the user with a closer and more detailed view of the selected defect without losing image quality. Further, the zoomed image 525 allows for more accurate defect characterization. For example, as shown in FIG. 5, responsive to the user selecting the defect indicator 520a and displaying the zoomed image 525, the system can be configured to generate a defect characterization box 530 to provide the user with a plurality of defect characteristics, e.g., a defect location, a defect dimension (height/width), an amount of material loss/gain at the defect (e.g., percentage loss), a shape of the defect by determining image metrics comprising an aspect ratio, a perimeter, or a moment of inertia, etc. In some embodiments, the defect location can be provided in terms of pixel coordinates. In some embodiments, the system can be configured to use the pixel location of the defect in order to determine the location of the defect within the weld 510 and/or the target object. For example, in a case where the modified image includes 4096 x 4096 pixels, the selected defect shown in zoomed image 525 can be centered around a pixel (1436, 66) within the modified image 515.

By generating the zoomed image 525 for each defect determined and provided with a defect indicator 520a-520f, the user can visually inspect each defect in detail to determine whether they deem the detected defect as critical, moderate, or insignificant. In some cases, the user can make such a determination based on experience, the defect presented in the zoomed image 525 and/or the defect characteristics provided in the defect characterization box 530. In this case, if an experienced user believes that a particular defect is insignificant, they can ignore the defect and move on to the next defect. In some embodiments, responsive to the GUI 500 generating a zoomed image 525 for each defect indicated by the indicators 520a-520f, determining the defect characteristics and determining the criticality of each defect, the system can further be configured to generate recommendations and implement solutions, similarly as described above.

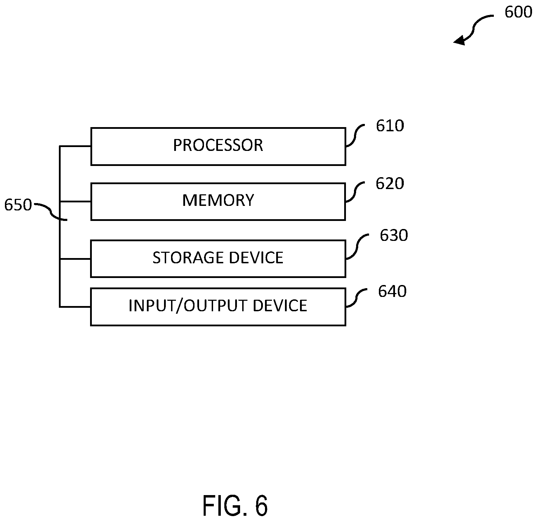

FIG. 6 depicts a block diagram illustrating a computing system 600 consistent with implementations of the current subject matter. Referring to FIGS. 1 and 6, the computing system 600 can be used to implement the defect characterization system and/or any components therein.

As shown in FIG. 6, the computing system 600 can include a processor 610, a memory 620, a storage device 630, and input/output device 640. The processor 610, the memory 620, the storage device 630, and the input/output device 640 can be interconnected via a system bus 650. The processor 610 is capable of processing instructions for execution within the computing system 600. Such executed instructions can implement one or more components of, for example, the defect characterization system. In some example embodiments, the processor 610 can be a single-threaded processor. Alternately, the processor 610 can be a multi-threaded processor. The processor 610 is capable of processing instructions stored in the memory 620 and/or on the storage device 630 to display graphical information for a user interface provided via the input/output device 640.

The memory 620 is a computer readable medium such as volatile or non-volatile that stores information within the computing system 600. The memory 620 can store data structures representing configuration object databases, for example. The storage device 630 is capable of providing persistent storage for the computing system 600. The storage device 630 can be a floppy disk device, a hard disk device, an optical disk device, a tape device, a solid-state drive, and/or other suitable persistent storage means. The input/output device 640 provides input/output operations for the computing system 600. In some example embodiments, the input/output device 640 includes a keyboard and/or pointing device. In various implementations, the input/output device 640 includes a display unit for displaying graphical user interfaces.

According to some example embodiments, the input/output device 640 can provide input/output operations for a network device. For example, the input/output device 640 can include Ethernet ports or other networking ports to communicate with one or more wired and/or wireless networks (e.g., a local area network (LAN), a wide area network (WAN), the Internet).

In some example embodiments, the computing system 600 can be used to execute various interactive computer software applications that can be used for organization, analysis and/or storage of data in various formats. Additionally and/or alternatively, the computing system 600 can be used to execute any type of software applications. These applications can be used to perform various functionalities, e.g., planning functionalities (e.g., generating, managing, editing of spreadsheet documents, word processing documents, and/or any other objects, etc.), computing functionalities, communications functionalities, etc. The applications can include various add-in functionalities or can be standalone computing objects and/or functionalities. Upon activation within the applications, the functionalities can be used to generate the user interface provided via the input/output device 640. The user interface can be generated and presented to a user by the computing system 600 (e.g., on a computer screen monitor, etc.).

One or more aspects or features of the subject matter described herein can be realized in digital electronic circuitry, integrated circuitry, specially designed ASICs, field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, include machine instructions for a programmable processor, and can be implemented in a high-level procedural and/or object-oriented programming language, and/or in assembly/machine language. As used herein, the term "machine-readable medium" refers to any computer program object, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can additionally and/or alternatively store such machine instructions in a transient manner, such as for example, as would a processor cache or other random-access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including acoustic, speech, or tactile input. Other possible input devices include touch screens or other touch-sensitive devices such as single or multi-point resistive or capacitive track pads, voice recognition hardware and software, optical scanners, optical pointers, digital image capture devices and associated interpretation software, and the like.

In the descriptions above and in the claims, phrases such as "at least one of" or "one or more of' may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more objects. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub combinations of the disclosed features and/or combinations and sub combinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A method comprising:
receiving, from an imaging device, an inspection image of a target object;
determining an inspection thickness of the target object based on the inspection image;
converting into a multilevel thresholded thickness map based on a particular sensitivity;
determining a defect of the target object based on the inspection thickness;
quantifying and characterizing the defect;
determining a critical level of the defect of the target object by comparing a parameter of the defect to a critical threshold; and
generating a recommendation based on the critical level.

2. The method of claim 1, wherein the target object comprises a portion of an industrial asset, wherein the portion of the industrial asset comprises a pipe wall at a first location of an insulated pipe.

3. The method of claim 1, further comprising:
identifying seed points on the multilevel thresholded image; and
region growing the seed points to determine the spatial extents of defects.

4. The method of claim 1, wherein quantifying and characterizing the defect comprises:
determining a loss of material or a gain of material;
determining a size of the defect;
estimating a shape of the defect by determining image metrics comprising an aspect ratio, a perimeter, or a moment of inertia; and
determining a location of the defect.

5. The method of claim 1, wherein generating the recommendation comprises an instruction for a repairing device to automatically repair the target object by correcting the defect.

6. The method of claim 1, wherein the recommendation is generated using a defect characterization application comprising a predictive model.

7. The method of claim 1, further comprising:
providing the recommendation based on the critical level in a display of a processing system, the display comprising a highlight of the defect atop a color map of the inspection image.

8. The method of claim 1, wherein the defect comprises a material loss measurement or a material gain measurement of the pipe wall.

9. The method of claim 1, wherein the imaging device comprises a radiographic source, a radiographic detector, and a crawler device including a processor, a controller, and a plurality of positioning mechanisms configured to position the radiographic source and the radiographic detector at one or more locations along a length of the target object.

10. A system comprising:
a memory; and
a processor, coupled to the memory, the processor configured to perform operations including
receiving, from an imaging device, an inspection image of a target object;
determining an inspection thickness of the target object based on the inspection image; converting into a multilevel thresholded thickness map based on a particular sensitivity;
determining a defect of the target object based on the inspection thickness;
quantifying and characterizing the defect;
determining a critical level of the defect of the target object by comparing a parameter of the defect to a critical threshold; and
generating a recommendation based on the critical level.

11. The system of claim 10, wherein the target object comprises a portion of an industrial asset, wherein the portion of the industrial asset comprises a pipe wall at a first location of an insulated pipe.

12. The system of claim 10, wherein the operations further comprise:
identifying seed points on the multilevel thresholded image;
region growing the seed points to determine the spatial extents of defects;
determining a loss of material or a gain of material;
determining a size of the defect;
estimating a shape of the defect by determining image metrics comprising an aspect ratio, a perimeter, or a moment of inertia; and
determining a location of the defect.

13. The system of claim 10, wherein generating the recommendation comprises an instruction for a repairing device to automatically repair the target object by correcting the defect, wherein the recommendation is generated using a defect characterization application comprising a predictive model.

14. The system of claim 10, wherein the defect comprises a material loss measurement or a material gain measurement of the pipe wall.

15. The system of claim 10, wherein the imaging device comprises a radiographic source, a radiographic detector, and a crawler device including a processor, a controller, and a plurality of positioning mechanisms configured to position the radiographic source and the radiographic detector at one or more locations along a length of the target object.

16. A computer program product comprising a non-transitory machine-readable medium storing instructions that, when executed by at least one programmable processor that comprises at least one physical core and a plurality of logical cores, cause the at least one programmable processor to perform operations comprising:
receiving, from an imaging device, an inspection image of a target object;
determining an inspection thickness of the target object based on the inspection image;
converting into a multilevel thresholded thickness map based on a particular sensitivity;
determining a defect of the target object based on the inspection thickness;
quantifying and characterizing the defect;
determining a critical level of the defect of the target object by comparing a parameter of the defect to a critical threshold; and
generating a recommendation based on the critical level.

17. The computer program product of claim 16, wherein the target object comprises a portion of an industrial asset, wherein the portion of the industrial asset comprises a pipe wall at a first location of an insulated pipe.

18. The computer program product of claim 16, wherein the operations further comprise:
identifying seed points on the multilevel thresholded image;
region growing the seed points to determine the spatial extents of defects;
determining a loss of material or a gain of material;
determining a size of the defect;
estimating a shape of the defect by determining image metrics comprising an aspect ratio, a perimeter, or a moment of inertia; and
determining a location of the defect.

19. The computer program product of claim 16, wherein generating the recommendation comprises an instruction for a repairing device to automatically repair the target object by correcting the defect, wherein the recommendation is generated using a defect characterization application comprising a predictive model.

20. The computer program product of claim 16, wherein the defect comprises a material loss measurement or a material gain measurement of the pipe wall.
